# EUROPEAN PATENT APPLICATION

(11) **EP 4 542 389 A1**
(43) Date of publication of application: **23.04.2025**
(21) Application number: 24192354.9
(22) Date of filing: 01.08.2024
(51) Int. Cl.: G06F 9/50

(54) **METHOD FOR PROCESSING TASK, ELECTRONIC DEVICE AND STORAGE MEDIUM**

(30) Priority: 20.10.2023 CN 202311370130
(71) Applicant: Beijing Xiaomi Mobile Software Co., Ltd., Beijing 100085 (CN)
(72) Inventor: LI, Guosheng, Beijing, 100085 (CN); YI, Yan, Beijing, 100085 (CN); WANG, Bin, Beijing, 100085 (CN); ZHANG, Minghua, Beijing, 100085 (CN)
(74) Representative: Dehns Germany Partnerschaft mbB

(57) **Abstract**

The present disclosure relates to a method for processing a task, an electronic device and a storage medium. The method includes: obtaining an available resource for a to-be-processed task, and the to-be-processed task is a task of a device; and processing the to-be-processed task by using the available resource, in response to the to-be-processed task, the device is capable of connecting to at least one other device, and the available resource is provided by the device and/or the at least one other device.

## Description

### TECHNICAL FIELD

The present disclosure relates to the field of terminal device technologies, and more particularly, to a method for processing a task, an electronic device and a storage medium.

### BACKGROUND

In recent years, functions of terminal devices have become increasingly rich, and their performances are also gradually improved. These added functions and improved performances rely on efficient and accurate data processing capabilities of the terminal devices, such as image processing capabilities, audio processing capabilities, etc. In order to obtain better performances, the existing terminal devices typically rely on complex models to process data. However, in the related arts, the terminal devices are less efficient when using the complex models to process the data, resulting in slower responses to user operations, which affects usage experience of users.

### SUMMARY

In order to overcome problems existing in the related arts, embodiments of the present disclosure provide a method and apparatus for processing a task, an electronic device and a storage medium to solve defects in the related arts.

According to an aspect of embodiments of the present disclosure, there is provided a method for processing a task, and the method includes:
obtaining an available resource for a to-be-processed task, wherein the to-be-processed task is a task of a device; and
processing the to-be-processed task by using the available resource, in response to the to-be-processed task;
wherein the device is capable of connecting to at least one other device; and
the available resource is provided by the device and/or the at least one other device.

In an embodiment of the present disclosure, the method further includes: determining an execution strategy according to the available resource.

In an embodiment of the present disclosure, the execution strategy includes: distributing the to-be-processed task into at least one sub-task, wherein the sub-task is at least part of the to-be-processed task.

In an embodiment of the present disclosure, the processing the to-be-processed task includes: processing, by the device and/or the at least one other device, the at least one sub-task.

In an embodiment of the present disclosure, the processing the to-be-processed task includes: processing, by the device and/or the at least one other device, the to-be-processed task.

In an embodiment of the present disclosure, the distributing the to-be-processed task into the at least one sub-task includes: determining the at least one sub-task according to the available resource.

In an embodiment of the present disclosure, the determining the at least one sub-task according to the available resource includes:
determining the to-be-processed task as the at least one sub-task according to a capability of the available resource, wherein the capability of the available resource includes a resource provision capability of the device or a resource provision capability of the at least one other device that satisfies a resource availability state.

In an embodiment of the present disclosure, the processing the to-be-processed task includes:
distributing the at least one sub-task to the device and/or the at least one other device according to a capability of the available resource to cause the device and/or the at least one other device to process the at least one sub-task, wherein the capability of the available resource includes a resource provision capability of the device or a resource provision capability of the at least one other device that satisfies a resource availability state.

In an embodiment of the present disclosure, the method further includes:
receiving available resource information of the device and/or the at least one other device, wherein the available resource information includes a resource provision capability of the device.

In an embodiment of the present disclosure, the method further includes:
sending an available resource request to the at least one other device.

In an embodiment of the present disclosure, the processing the to-be-processed task by using the available resource includes:
connecting with the at least one other device by using the available resource to cause the at least one other device to process the to-be-processed task; or
connecting with the at least one other device by using the available resource to cause the device and the at least one other device to process the to-be-processed task; or
performing the to-be-processed task by using the device among the available resource.

In an embodiment of the present disclosure, the method further includes:
establishing a connection with the at least one other device in response to a notification from the at least one other device; and/or
receiving a request message from the at least one other device and establishing communication with the at least one other device, wherein the notification or the request message is configured to represent that the at least one other device is equipped with a capability to at least partially process the to-be-processed task.

In an embodiment of the present disclosure, the method further includes:
responding to an available resource request from the at least one other device; and
obtaining available resource information of the device and returning the available resource information to the at least one other device, wherein the available resource information includes a resource provision capability of the device.

In an embodiment of the present disclosure, the method further includes:
providing available resource information of the device and/or the at least one other device, wherein the available resource information includes the resource provision capability of the device or the at least one other device.

In an embodiment of the present disclosure, the method further includes: providing the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the method further includes:
receiving a task processing request sent by the at least one other device; and
performing a task sent by the other device.

In an embodiment of the present disclosure, a priority of the at least one other device is not higher than a priority of the device.

In an embodiment of the present disclosure, the method further includes:
determining the priority according to a frequency of use and/or a time period of use of the device.

In an embodiment of the present disclosure, the available resource includes a capability of the available resource, the capability of the available resource includes a resource provision capability of the device or the at least one other device that satisfies a resource availability state, and the resource provision capability includes at least one of a computing power available for provision, a processor power or a storage capacity.

According to another aspect of embodiments of the present disclosure, there is provided a method for processing a task, and the method includes:
responding to an available resource request from at least one other device; and
determining available resource information, and sending the available resource information to the at least one other device, wherein the available resource information includes a resource provision capability satisfying a resource availability state.

In an embodiment of the present disclosure, the method further includes:
receiving at least part of a to-be-processed task; and
performing the at least part of the to-be-processed task.

In an embodiment of the present disclosure, the method further includes:
providing the available resource information, wherein the available resource information includes the resource provision capability satisfying the resource availability state.

In an embodiment of the present disclosure, the method further includes providing the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the available resource information includes at least one of:
a computing power available for provision;
a processor power; or
a storage capacity.

In an embodiment of the present disclosure, the received at least part of the to-be-processed task is from the at least one other device with a higher priority.

In an embodiment of the present disclosure, the method further includes:
sending part or all of the at least part of the to-be-processed task to a third device.

According to yet another aspect of embodiments of the present disclosure, there is provided a method for processing a task, and the method includes:
obtaining information about an available device that is equipped with a capability to process a to-be-processed task, wherein the to-be-processed task is a task of a current device, and the available device is capable of being in a communication with the current device;
selecting at least one available device to perform at least part of the to-be-processed task; and
obtaining a processing result of the available device for the at least part of the to-be-processed task.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the method further includes:
integrating a processing result into a processing result output of the to-be-processed task.

In an embodiment of the present disclosure, the available device is within communication coverage of the current device.

In an embodiment of the present disclosure, the selecting the at least one available device to perform the at least part of the to-be-processed task includes:
selecting, according to a computing power available for provision of the available device, the at least one available device to perform the at least part of the to-be-processed task.

In an embodiment of the present disclosure, the information about the available device is transmitted through broadcast or unicast.

According to still another aspect of embodiments of the present disclosure, there is provided a method for processing a task, and the method includes:
sending information about an available device that is equipped with a capability to process a to-be-processed task, wherein the to-be-processed task is a task of another device, and the available device is capable of being in communication with the other device;
in response to at least part of the to-be-processed task sent by the other device, performing the at least part of the to-be-processed task; and
sending a processing result of the at least part of the to-be-processed task.

In an embodiment of the present disclosure, the information about the available device is transmitted through broadcast or unicast.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the method further includes:
integrating the processing result into a processing result output of the to-be-processed task.

In an embodiment of the present disclosure, the available device is within communication coverage of the other device.

In an embodiment of the present disclosure, the performing the at least part of the to-be-processed task in response to the at least part of the to-be-processed task sent by the other device includes:
performing the at least part of the to-be-processed task according to the computing power available for provision of the available device.

According to still another aspect of embodiments of the present disclosure, there is provided an electronic device, and the electronic device includes:
an obtaining module, configured to obtain an available resource for a to-be-processed task, wherein the to-be-processed task is a task of a device; and
a processing module, configured to process the to-be-processed task by using the available resource, in response to the to-be-processed task;
wherein the device is capable of connecting to at least one other device; and
the available resource is provided by the device and/or the at least one other device.

In an embodiment of the present disclosure, the electronic device further includes an execution module, configured to determine an execution strategy according to the available resource.

In an embodiment of the present disclosure, the execution strategy includes: distributing the to-be-processed task into at least one sub-task, wherein a sub-task is at least part of the to-be-processed task.

In an embodiment of the present disclosure, when the processing module is configured to process the to-be-processed task, the at least one sub-task is processed by the device and/or the at least one other device.

In an embodiment of the present disclosure, when the processing module is configured to process the to-be-processed task, the to-be-processed task is processed by the device and/or the at least one other device.

In an embodiment of the present disclosure, when the execution module is configured to determine the at least one sub-task according to the available resource, when distributing the to-be-processed task into the at least one sub-task.

In an embodiment of the present disclosure, the execution module is configured to, when determining the at least one sub-task according to the available resource:
determine the to-be-processed task as the at least one sub-task according to a capability of the available resource, wherein the capability of the available resource includes a resource provision capability of the device or a resource provision capability of the at least one other device that satisfies a resource availability state.

In an embodiment of the present disclosure, the processing module is configured to, when processing the to-be-processed task:
distribute the at least one sub-task to the device and/or the at least one other device according to a capability of the available resource to cause the device and/or the at least one other device to process the at least one sub-task, wherein the capability of the available resource includes a resource provision capability of the device or a resource provision capability of the at least one other device that satisfies a resource availability state.

In an embodiment of the present disclosure, the electronic device further includes an information receiving module, configured to:
receive available resource information of the device and/or the at least one other device, wherein the available resource information includes a resource provision capability of the device.

In an embodiment of the present disclosure,the electronic device further includes a request sending module, configured to:
send an available resource request to the at least one other device.

In an embodiment of the present disclosure, the processing module is configured to, when processing the to-be-processed task by using the available resource:
connect with the at least one other device by using the available resource to cause the at least one other device to process the to-be-processed task; or
connect with the at least one other device by using the available resource to cause the device and the at least one other device to process the to-be-processed task; or
perform the to-be-processed task by using the device among the available resource.

In an embodiment of the present disclosure, the electronic device further includes a communication module, configured to:
establish a connection with the at least one other device in response to a notification from the at least one other device; and/or
receive a request message from the at least one other device and establish communication with the at least one other device, wherein the notification or the request message is configured to represent that the at least one other device is equipped with a capability to at least partially process the to-be-processed task.

In an embodiment of the present disclosure, the electronic device further includes an information sending module, configured to:
respond to an available resource request from the at least one other device; and
obtain available resource information of the device and returning the available resource information to the at least one other device, wherein the available resource information includes a resource provision capability of the device.

In an embodiment of the present disclosure, the electronic device further includes an information providing module, configured to:
provide available resource information of the device and/or the at least one other device, wherein the available resource information includes a resource provision capability of the device or the at least one other device.

In an embodiment of the present disclosure, the information providing module is configured to provide the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the electronic device further includes a task receiving module, configured to:
receive a task processing request sent by the at least one other device; and
perform a task sent by the other device.

In an embodiment of the present disclosure, a priority of the at least one other device is not higher than a priority of the device.

In an embodiment of the present disclosure, the electronic device further includes a priority module, configured to:
determine the priority according to a frequency of use and/or a time period of use of the device.

In an embodiment of the present disclosure, the available resource includes a capability of the available resource, the capability of the available resource includes a resource provision capability of the device or the at least one other device that satisfies a resource availability state, and the resource provision capability includes at least one of a computing power available for provision, a processor power or a storage capacity.

According to still another aspect of embodiments of the present disclosure, there is provided an electronic device, and the electronic device includes:
a response module, configured to respond to an available resource request from at least one other device; and
an information sending module, configured to determine available resource information, and send the available resource information to the at least one other device, wherein the available resource information includes a resource provision capability satisfying a resource availability state.

In an embodiment of the present disclosure, the electronic device further includes a receiving module, configured to:
receive at least part of a to-be-processed task; and
perform the at least part of the to-be-processed task.

In an embodiment of the present disclosure, the electronic device further includes an information providing module, configured to:
provide the available resource information, wherein the available resource information includes the resource provision capability satisfying the resource availability state.

In an embodiment of the present disclosure, the information providing module is configured to provide the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the available resource information includes at least one of:
a computing power available for provision;
a processor power; or
a storage capacity.

In an embodiment of the present disclosure, the received at least part of the to-be-processed task is from the at least one other device with a higher priority.

In an embodiment of the present disclosure, the electronic device further includes a task sending module, configured to:
send part or all of the at least part of the to-be-processed task to a third device.

According to still another aspect of embodiments of the present disclosure, there is provided an electronic device, and the electronic device includes:
an available device information obtaining module, configured to obtain information about an available device that is equipped with a capability to process a to-be-processed task, wherein the to-be-processed task is a task of a current device, and the available device is capable of being in a communication with the current device;
a processing module, configured to select at least one available device to perform at least part of the to-be-processed task; and
a result obtaining module, configured to obtain a processing result of the available device for the at least part of the to-be-processed task.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the electronic device further includes a result integration module, configured to:
integrate the processing result into a processing result output of the to-be-processed task.

In an embodiment of the present disclosure, the available device is within communication coverage of the current device.

In an embodiment of the present disclosure, the processing module is configured to:
select, according to a computing power available for provision of the available device, the at least one available device to perform the at least part of the to-be-processed task.

In an embodiment of the present disclosure, the information about the available device is transmitted through broadcast or unicast.

According to still another aspect of embodiments of the present disclosure, there is provided an electronic device, and the electronic device includes:
an available device information sending module, configured to send information about an available device that is equipped with a capability to process a to-be-processed task, wherein the to-be-processed task is a task of another device, and the available device is capable of being in communication with the other device;
a processing module, configured to, in response to at least part of the to-be-processed task sent by the other device, perform the at least part of the to-be-processed task; and
a result sending module, configured to send a processing result of the at least part of the to-be-processed task.

In an embodiment of the present disclosure, the information about the available device is transmitted through broadcast or unicast.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the electronic device further includes a result integration module, configured to:
integrate the processing result into a processing result output of the to-be-processed task.

In an embodiment of the present disclosure, the available device is within communication coverage of the other device.

In an embodiment of the present disclosure, the processing module is configured to:
perform the at least part of the to-be-processed task according to a computing power available for provision of the available device.

According to still another aspect of embodiments of the present disclosure, there is provided an electronic device, and the electronic device includes a memory and a processor, wherein the memory is configured to store computer instructions executable on the processor, and the processor is configured to implement the method for processing the task as described above when executing the computer instructions.

According to still another aspect of embodiments of the present disclosure, there is provided a data processing system, and the data processing system includes at least one electronic device as described above.

According to still another aspect of embodiments of the present disclosure, there is provided a computer-readable storage medium having a computer program stored thereon which, when executed by a processor, implements the methods as described above.

The technical solutions provided by embodiments of the present disclosure may include the following beneficial effects:
the method for processing the task provided by embodiments of the present disclosure may obtain the available resource for the to-be-processed task, and process, in response to the to-be-processed task, the to-be-processed task by using the available resource. Since the to-be-processed task is the task of the device, the device can be connected to the at least one other device, and the available resource is provided by the device and/or the at least one other device, the method allocates the task of the device to the available resource provided by the device itself and/or the at least one other device for processing, which enables the other device to provide the available resource to the device that initiates the processing of the to-be-processed task, in other words, the device that initiates the processing of the to-be-processed task uses the available resource of the other device to process the to-be-processed task, or in other words, sharing of the available resource between different devices is achieved, which not only can improve the processing efficiency of the to-be-processed task, but also improves the resource utilization of the other device, reduces and simplifies the computing load of the single device to process the to-be-processed task, and ultimately improves the response speed of the device to the user operation and improves the usage experience of the user.

### BRIEF DESCRIPTION OF THE DRAWINGS

The accompanying drawings here, which are incorporated in and constitute a part of this specification, illustrate embodiments consistent with the present disclosure and, together with the description, serve to explain principles of the present disclosure.
FIG. 1 shows a flowchart of a method for processing a task for a device to process a to-be-processed task according to an embodiment of the present disclosure;
FIG. 2 shows a flowchart of a method for processing a task in which a device participates in processing a to-be-processed task according to an embodiment of the present disclosure;
FIG. 3 shows a flowchart of a method for processing a task applied to a current device according to an embodiment of the present disclosure;
FIG. 4 shows a flowchart of a method for processing a task applied to an available device according to an embodiment of the present disclosure;
FIG. 5 shows a block diagram of an electronic device according to an embodiment of the present disclosure;
FIG. 6 shows a block diagram of an electronic device according to another embodiment of the present disclosure;
FIG. 7 shows a block diagram of an electronic device according to yet another embodiment of the present disclosure;
FIG. 8 shows a block diagram of an electronic device according to still another embodiment of the present disclosure; and
FIG. 9 shows a structural block diagram of an electronic device according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present disclosure. Instead, they are merely examples of devices and methods consistent with some aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "said" and "the" are intended to include the plural forms as well, unless the context clearly indicates otherwise. It should also be understood that the term "and/or" as used herein refers to and includes any or all possible combinations of one or more of the associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if' as used herein can be interpreted as "upon" or "when" or "in response to determination".

In recent years, functions of terminal devices have become increasingly rich, and their performances are also gradually improved. These added functions and improved performances rely on efficient and accurate data processing capabilities of the terminal devices, such as image processing capabilities, audio processing capabilities, etc. In order to obtain better performances, the existing terminal devices typically rely on complex models to process data. However, in the related arts, the terminal devices are less efficient when using the complex models to process the data, resulting in slower responses to user operations, which affects usage experience of users.

Based on this, at least one embodiment of the present disclosure provides a method for processing a task, which may be applied to any device. The device can be in connection with and in communication with at least one other device, the device and/or the at least one other device can provide available resources, and the available resource can be understood as a device that can provide a task processing capability, in other words, the device and/or the at least one other device can provide itself as a resource, and the resource can be used for task processing, computing power contribution, etc. The device and another device in connection with and in communication with it can be regarded as a terminal system based on their connection relationship.

The device and the at least one other device can realize mutual communication connection through a wireless network, a Bluetooth and other communication modes. These devices may be a plurality of terminal devices belonging to an individual, or a plurality of terminal devices in a home, or a plurality of terminal devices in a certain network environment, or a plurality of terminal devices that can suggest the communication connection under a certain condition, etc. The terminal devices may be a plurality of types of devices that are the same or different, such as smartphones, smart TVs, tablets, PCs, smart speakers, vehicle-mounted terminals, home robots, AR/VR/MR glasses, smart glasses, wearable devices, home appliances, vehicle-mounted devices, travel devices (such as cars/scooters, etc.), etc.

For example, the method may use a task of any device as a to-be-processed task, and use the available resources provided by the device and/or the at least one other device in connection with the device to process the to-be-processed task, thereby realizing the resource sharing between the devices to improve the task processing efficiency and the resource utilization of the device. In particular, when the available resource provided by the at least one other device in connection with the device participates in processing the task, that is, when the at least one other device in connection with the device processes part or all of the task, the above effect can be more obviously reflected.

An image generation scene is taken as an example. If the to-be-processed task is to generate an image that requires high computing power, a device that initiates processing of the to-be-processed task may call another device that is in a communication connection with it to jointly complete the generation of the image in parallel, thereby improving the generation efficiency and improving the user experience.

A vehicle scene is taken as an example. The to-be-processed task by a voice assistant of a vehicle-mounted terminal is to recognize a piece of audio, but a model of the voice assistant is large. Therefore, another device (such as a mobile phone) in a communication connection with the vehicle-mounted terminal may be called to participate in the recognition, thereby improving the efficiency of voice recognition.

In the following, the specific content of this method will be introduced respectively from a side of a device (for example, a device where a to-be-processed task is located) that initiates processing of the to-be-processed task and a side of a device that provides an available resource.

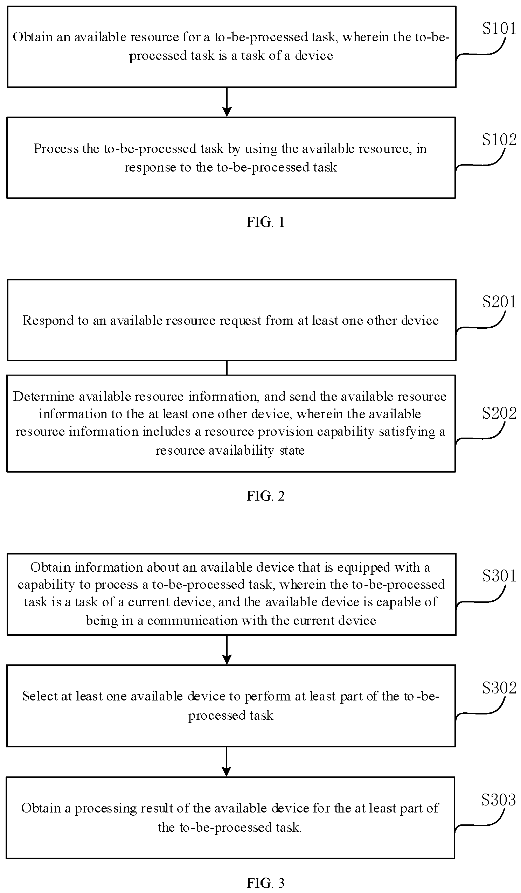

Reference is made to FIG. 1, which shows a flow of a method on the side of the device that initiates the processing of the to-be-processed task. The method includes steps S 101 to S102.

In the step S101, an available resource for a to-be-processed task is obtained, and the to-be-processed task is a task of a device.

The available resource is provided by the device (that is, the device that initiates the processing of the to-be-processed task) and/or at least one other device in connection with the device. The available resource provided by any device may be the device itself, and the available resource provided by the device may be measured or represented by a resource provision capability. For example, the resource provision capability may include at least one of a computing power available for provision, a processor power, a storage capacity, etc. The computing power available for provision among the resource provision capability may be determined by the device in combination with a main frequency of a processor chip, the number of cores of the processor, a memory capacity, a read and write speed of a storage device, a bus bandwidth, a graphics card performance, a hard disk type and interface, the number and type of external devices, selection of a compiler and program optimization, an operating system and software settings, etc. In other words, in addition to the device itself, the available resource may also include a capability of the available resource, and the capability of the available resource is a resource provision capability of the device and/or a resource provision capability of the at least one other device that satisfies a resource availability state. For example, satisfying the resource availability state may be that the resource provision capability is not less than a preset threshold. For example, if a resource provision capability of a device is not less than the preset threshold, this device satisfies the resource availability state; and if a resource provision capability of a device is less than the preset threshold, this device does not satisfy the resource availability state. Therefore, the available resource obtained in this step may include the device itself and a plurality of devices among the at least one other device, and the capability of the available resource may include resource provision capabilities of some or all of the plurality of devices.

Among the device that initiates the processing of the to-be-processed task and other devices, each device can obtain its own resource provision capability as available resource information, and actively or passively provide the available resource information to other devices other than itself. The following four examples are taken as examples to introduce a method for providing available resource information between devices.

Example 1: the at least one other device actively sends its available resource information to the device that initiates the processing of the to-be-processed task, and then the device that initiates the processing of the to-be-processed task can obtain the available resource information of the device and/or the at least one other device.

Example 2: the at least one other device passively sends its available resource information to the device that initiates the processing of the to-be-processed task. That is, the device that initiates the processing of the to-be-processed task may send an available resource request to the at least one other device, and after receiving the available resource request, the at least one other device may send its available resource information to the device that initiates the processing of the to-be-processed task, and then the device that initiates the processing of the to-be-processed task may receive the available resource information of the at least one other device.

Example 3: the device that initiates the processing of the to-be-processed task passively provides the available resource information to another device. That is, in response to an available resource request of the at least one other device, the device that initiates the processing of the to-be-processed task obtains the available resource information of the device, and returns the available resource information to the at least one other device. It can be understood that the device that initiates the processing of the to-be-processed task can not only receive the available resource information provided by other devices, but also at least provide its own available resource information to other devices according to this example. Since the device that initiates the processing of the to-be-processed task may also act as a resource capability provider (that is, acting as another device with respect to a device that initiates another task) when another device shares a task.

Example 4: if the device that initiates the processing of the to-be-processed task receives the available resource information of the at least one other device, it may actively or passively provide the available resource information of the device and/or the at least one other device. That is to say, the device that initiates the processing of the to-be-processed task may serve as a summary device of the available resource information, and provides the summarized available resource information of individual devices to other devices to avoid the repeated transmission of the available resource information between other devices, reducing waste of data transmission resources.

In each of the above examples, whether it is the device that initiates the processing of the to-be-processed task or the at least one other device, when it actively provides the available resource information, it may provide the available resource information under at least one of the following conditions:

in response to initiating a new device notification, that is, when a device that provides the available resource information is connected to a new device, it may provide the available resource information to the new device, such as its own available resource information, or its own available resource information and available resource information of other devices. In addition, it should be understood that the new device may also return its own available resource information due to this condition. In other words, when two devices establish a new connection, they will provide each other with the available resource information due to this condition. The available resource information provided may be its own available resource information, or the available resource information of itself and other devices;

in response to a time period since a previous provision of the available resource information being a preset time period, that is, the device that provides the available resource information provides the available resource information to other devices with a cycle of the preset time period. For example, the device that provides the available resource information sends the available resource information to other devices with the cycle of the preset time period, or update its cached available resource information with the cycle of the preset time period, so that other devices can obtain the available resource information; and

in response to detecting that the available resource information is out of a preset range, the preset range may be an absolute range or a relative range, and being out of the preset range may be greater than an upper limit of the range or less than a lower limit of the range. Taking the computing power available for provision among the available resource information as an example, in a case that a preset range of the computing power available for provision is [X,Y], if a computing power available for provision of the device that provides the available resource information is less than X (or less than X and a difference with X is greater than n), it is determined that the available resource information is out of the preset range, and in this case, the available resource information is provided to other devices, or if the computing power available for provision of the device that provides the available resource information is greater than Y (or greater than Y and a difference with Y is greater than n), it is determined that the available resource information is out of the preset range, and in this case, the available resource information is provided to other devices. X, Y, and n are all values of the computing power available for provision, and are all greater than 0.

The above four examples introduce various ways to provide the available resource information between the device that initiates the processing of the to-be-processed task and the at least one other device connected to it (that is, at least one of all devices in the terminal system mentioned above). In practical applications, there may be many variations of the examples based on the above inventive concept, which will not be described one by one. Based on the sharing and synchronization of the available resource information between these devices, the available resource for the to-be-processed task may be obtained in this step. It can be understood that the device that initiates the processing of the to-be-processed task obtaining the available resource for the to-be-processed task in this step is intended to use the resource (such as the computing power) provided by other devices to implement multi-device processing of the to-be-processed task, so as to improve its processing efficiency.

The device that initiates the processing of the to-be-processed task may determine whether the to-be-processed task requires the multi-device processing through at least one of the following conditions:
a first condition: the to-be-processed task is created. That is to say, if a data processing task that needs to be executed is established in a device to which the to-be-processed task belongs, then the data processing task may be considered as the to-be-processed task to perform this step to obtain the available resource information of itself and/or the at least one other device that it has received in advance;
a second condition: a task level of the to-be-processed task is greater than a preset level. That is to say, when a task level of a data processing task in a device is relatively high, it may be used as the to-be-processed task to perform this step to obtain the available resource information of itself and/or the at least one other device that it has received in advance. For example, the task level may be related to a task type or an algorithm, source data, etc. involved in the task;
a third condition: a computing power required for the to-be-processed task is greater than a first computing power threshold. That is to say, when a computing power required for a data processing task is relatively large (for example, an algorithm of the task is a relatively complex data processing model and a memory requirement for running this model is relatively large), it may be used as the to-be-processed task to perform this step to obtain the available resource information of itself and/or the at least one other device that it has received in advance;
a fourth condition: the computing power available for provision of the device that initiates the processing of the to-be-processed task is less than a second threshold. That is to say, when the computing power available for provision of the device that initiates the processing of the to-be-processed task is relatively small, the data processing task, if present, is used as the to-be-processed task to perform this step to obtain the available resource information of itself and/or the at least one other device that it has received in advance;
a fifth condition: the computing power available for provision of the device that initiates the processing of the to-be-processed task is less than a computing power required for the to-be-processed task. That is to say, when the computing power available for provision of a device is less than the computing power required for the data processing task of the device, this step may be performed to obtain the available resource information of itself and/or the at least one other device that it has received in advance; and
a sixth condition: a power of the device that initiates the processing of the to-be-processed task is less than a threshold. That is to say, when the power of the device that initiates the processing of the to-be-processed task is low, the data processing task, if present, is used as the to-be-processed task to perform this step to obtain the available resource information of itself and/or the at least one other device that it has received in advance.

By setting the above conditions, there is selectivity when the device executes the task. That is, when the task is simple and the device is in a good condition, the device independently executes the task, and when the task is complex and the device is in a poor condition, part or all of the task is shared to other devices, which not only can improve the task execution efficiency, but also can avoid the large waste caused by the redundant communication. It can be understood that in practical applications, there may be many variations of the conditions set based on the above inventive concept, which will not be described one by one.

In the step S102, in response to the to-be-processed task, the to-be-processed task is processed by using the available resource.

In an embodiment of the present disclosure, processing the to-be-processed task includes: processing the to-be-processed task by the device and/or the at least one other device. That is to say, the to-be-processed task is allocated to at least one device including or not including the device so as to be processed. For example, the to-be-processed task is allocated to the device itself for processing, the to-be-processed task is allocated to the at least one other device for processing, or the to-be-processed task is allocated to the device itself and the at least one other device for processing. It can be understood that when there are a plurality of devices to process the to-be-processed task, the to-be-processed task may be processed in parallel or in serial.

In another embodiment of the present disclosure, the method may further include: determining an execution strategy according to the available resource, and the execution strategy is configured to represent a task processing manner. For example, the execution strategy may include: distributing the to-be-processed task into at least one sub-task, and the sub-task is at least part of the to-be-processed task. Processing the to-be-processed task based on the execution strategy may include: processing, by the device and/or the at least one other device, the at least one sub-task. That is to say, the device that initiates the processing of the to-be-processed task splits the to-be-processed task into the at least one sub-task, and distributes these sub-tasks to the at least one device including itself or not including itself for processing.

For example, the to-be-processed task has an algorithm and source data, and using the algorithm to process the source data means using the algorithm to process task content represented by the to-be-processed task. The algorithm of the to-be-processed task may be a data processing model (e.g., a machine learning model such as a deep learning model), and the source data of the to-be-processed task may be image data, audio data, etc. In this step, a form conversion is performed on the to-be-processed task, and a result of the form conversion may be used as the only sub-task. Alternatively, in this step, the algorithm and/or the source data of the to-be-processed task may be split to obtain a plurality of sub-tasks, that is, an algorithm of the sub-task is a partial algorithm of the algorithm of the to-be-processed task, and/or source data of the data processing sub-task is part of the source data of the to-be-processed task.

The following two examples are taken as examples to introduce details of the sub-task distribution. In practical applications, there may be many variations of the examples based on the above inventive concept. Here, the following two examples are only taken as examples, and other examples will not be described one by one.

Example 1: distributing the to-be-processed task into the at least one sub-task includes: determining the at least one sub-task according to the available resource; that is to say, the to-be-processed task may be split according to the available resource provided by the device and the at least one other device to obtain the at least one sub-task. For example, the to-be-processed task is split according to the number of devices providing the available resource to obtain a matching number of sub-tasks.

Since the device that initiates the processing of the to-be-processed task obtains the available resource in the step S101, and may also obtain the capability of the available resource (i.e., the resource provision capability of the device or the resource provision capability of the at least one other device that satisfies the resource availability state), the to-be-processed task may be further determined as the at least one sub-task according to the capability of the available resource.

For example, in a case where the resource provision capability of the device includes the computing power available for provision, the to-be-processed task is split into the at least one sub-task according to, among the available resource (i.e., the device that initiates the processing of the to-be-processed task and the at least one other device), the number of devices whose the computing power available for provision is not less than a computing power threshold. The computing power threshold is used to measure whether the device can process the at least one sub-task, and the computing power threshold can be set in advance, or adaptively set according to the to-be-processed task before the to-be-processed task is split. For example, if the number of devices, among the available resource, whose the computing power available for provision is not less than the computing power threshold is N, the to-be-processed task may be split into N sub-tasks whose the required computing power is less than the computing power threshold. Alternatively, if the maximum number of sub-tasks into which the to-be-processed task can be split is less than N, then the to-be-processed task may be split according to the maximum number of sub-tasks into which the to-be-processed task can be split.

For another example, in a case where the resource provision capability of the device includes at least one of the computing power available for provision, the power, and the temperature, the to-be-processed task may be split into the at least one sub-task according to the number of devices, among the available resource, that meet at least one of the following conditions: the computing power available for provision being not less than the computing power threshold; the power being not less than a power threshold; or the temperature being not greater than the temperature threshold.

In this example, whether a device is suitable for processing the at least one sub-task can be measured from at least one dimension of the computing power, the power, or the temperature, so that a device that satisfies the condition will not affect the processing of the sub-task due to a defect in any one dimension.

Example 2: processing the to-be-processed task may include: distributing the at least one sub-task to the device and/or the at least one other device according to the capability of the available resource to cause the device and/or the at least one other device to process the at least one sub-task, and the capability of the available resource includes the resource provision capability of the device or the resource provision capability of the at least one other device that satisfies the resource availability state.

The at least one sub-task described in this example may be obtained by splitting the to-be-processed task according to the above example 1 or 2, or by splitting the to-be-processed task in the following manner: according to a condition of the to-be-processed task, the to-be-processed task is split into the at least one sub-task based on at least one of the following principles: the highest execution efficiency for the to-be-processed task; and/or the sub-task of the to-be-processed task being an execution unit that cannot be split, and/or other conditions of the task itself. In practical applications, the above three manners may also be combined, and the applicability of the combination of the above solutions can be comprehensively considered according to a priority rule and actual needs.

When the to-be-processed task is split based on the principle of the highest execution efficiency for the to-be-processed task, at least one parallel part of the to-be-processed task can be respectively determined as at least one corresponding sub-task, and any two parallel parts of the to-be-processed task are independent of each other. For example, different units in the data processing model are responsible for performing feature processing from different dimensions on image data, and these different units may be split into independent parallel parts to form a plurality of sub-tasks.

When the to-be-processed task is split based on the principle of the sub-task in the to-be-processed task being the execution unit that cannot be split, the to-be-processed task may be split in the most refined manner until each split sub-task cannot be split anymore.

In this example, the at least one sub-task is matched with the available resource (devices that satisfy the resource availability state) based on the available resource capability, so that each of the at least one sub-task matches a device that satisfies the resource availability state. Two specific matching manners will be introduced in the following, but it can be understood that the following introduction to the matching manner is not a limitation on the matching manner.

A first matching manner: each of the at least one sub-task is sequentially determined in an order of required resources from large to small, and after each sub-task is determined, a device with the greatest resource provision capability (without matching with any sub-task) among the available resource (devices that satisfy the resource availability state) is matched with the sub-task. The resource provision capability of the device with the greatest resource provision capability among the available resource is not less than a resource required for the sub-task.

A matching principle of this manner is that: the greater the resource required by the sub-task, the greater the resource provision capability of the device which is matched with the sub-task. This manner enables each sub-task to be matched with a device that satisfies the resource it requires, preventing the device with the large resource provision capability from being matched with the sub-task that requires the small resource to cause the sub-task that requires the large resource to fail to be matched with the device that satisfies the required resource.

A second matching manner: a greedy matching algorithm is used to match the at least one sub-task with the available resource, and the greedy matching algorithm is based on at least one of the following principles: the number of sub-tasks that are not matched to devices being minimum; a resource provision capability of at least one device matching the at least one sub-task being the largest; or a device with the smallest resource remaining amount among the at least one terminal device matching the at least one sub-task having the largest resource provision capability, and the resource remaining amount includes a difference between the resource provision capability and a resource required by the matching sub-task.

The greedy matching algorithm is a simple and commonly used matching algorithm used to solve the maximum matching problem in a combinatorial optimization problem. It is typically used to handle the matching between two sets, where each element can only match one element from the other set. The basic idea of the greedy matching algorithm is to select an element from one set and match it with an element in the other set, and then continue to select the next unmatched element for matching, until no more matches can be made. The strategy of selecting the matching is to satisfy at least one preset principle (that is, the plurality of principles mentioned above) as much as possible.

It can be understood that the above at least one principle may be preset with a priority order. That is to say, in a greedy matching process, all the above principles are satisfied first, and if not all the above principles can be satisfied, principles with lower priorities are abandoned one by one.

The two matching manners provided in embodiments of the present disclosure enable the at least one sub-task obtained by splitting the to-be-processed task to be matched with the available resource (devices that satisfy the resource availability state), thereby making preparations for the sub-task allocation in advance.

The greedy algorithm is just an example of a specific algorithm. Other algorithms in the related arts may also be selected based on the principles in the above matching process to achieve the matching between the sub-task and the device.

Based on the content introduced in the above two embodiments, such as the splitting of the to-be-processed task, matching with the available resource and other content introduced in Examples 1 and 2, processing the to-be-processed task by using the available resource in this step may include:
using the available resource to connect with the at least one other device to cause the at least one other device to process the to-be-processed task. For example, when the device that initiates the processing of the to-be-processed task matches a device for each sub-task, each sub-task is matched to one of the at least one other device, then in this step, each sub-task may be sent to a device matching with it, so that the device that receives the sub-task processes the received sub-task; or
using the available resource to connect with the at least one other device to cause the device and the at least one other device to process the to-be-processed task. For example, when the device that initiates the processing of the to-be-processed task matches the device for each sub-task, the sub-task is matched to the device that initiates the processing of the to-be-processed task or is also matched to the device among the at least one other device, then in this step, each sub-task may be sent to the device matching with it, so that the device that receives the sub-task processes the received sub-task; or
using the device among the available resource to perform the to-be-processed task. For example, when the device that initiates the processing of the to-be-processed task matches the device for each sub-task, all sub-tasks match the device that initiates the processing of the to-be-processed task, then in this step, the device that initiates the processing of the to-be-processed task will remain all sub-tasks on itself for processing. It can be understood that in this manner, although the device that initiates the processing of the to-be-processed task processes all sub-tasks by itself, the device processes the to-be-processed task in this manner after it splits the to-be-processed task and matches the split sub-task with the available resource based on the capability of the available resource, which is different from the related arts.

When the device that initiates the processing of the to-be-processed task performs this step, a device among the at least one other device may receive a task processing request sent by the device that initiates the processing of the to-be-processed task, and executes the sub-task sent by the device that initiates the processing of the to-be-processed task.

The method for processing the task provided by embodiments of the present disclosure may obtain the available resource for the to-be-processed task, and process, in response to the to-be-processed task, the to-be-processed task by using the available resource. Since the to-be-processed task is the task of the device, the device can be connected to the at least one other device, and the available resource is provided by the device and/or the at least one other device, the method allocates the task of the device to the available resource provided by the device itself and/or the at least one other device for processing, which enables the other device to provide the available resource to the device that initiates the processing of the to-be-processed task, in other words, the device that initiates the processing of the to-be-processed task uses the available resource of the other device, or in other words, sharing of the available resource between different devices is achieved, which not only can improve the processing efficiency of the to-be-processed task, but also improves the resource utilization of the other device, reduces and simplifies the computing load of the single device to process the to-be-processed task, and ultimately improves the response speed of the device to the user operation and improves the usage experience of the user.

In some embodiments of the present disclosure, a connection may be established between the device that initiates the processing of the to-be-processed task and the at least one other device in any of the following two manners.

Manner 1: the device that initiates the processing of the to-be-processed task actively establishes the communication connection with the at least one other device.

The device that initiates the processing of the to-be-processed task may send a request message to the at least one other device, and the request message is configured to represent that the device that initiates the processing of the to-be-processed task has a capability to at least partially process the to-be-processed task.

The at least one other device may receive the request message, (either automatically or based on an operation input by the user that the establishment of the connection is agreed) establish the communication connection with the device that initiates the processing of the to-be-processed task, and return a notification to the device that initiates the processing of the to-be-processed task, the notification is configured to represent that the at least one other device has the capability to at least partially process the to-be-processed task.

The device that initiates the processing of the to-be-processed task may establish the communication connection with the at least one other device in response to the notification from the at least one other device.

Manner 2: the at least one other device actively establishes the communication connection with the device that initiates the processing of the to-be-processed task.

The at least one other device may send a request message to the device that initiates the processing of the to-be-processed task, and the request message is configured to represent that the at least one other device has the capability to at least partially process the to-be-processed task.

The device that initiates the processing of the to-be-processed task may receive the request message from the at least one other device, (either automatically or based on the operation input by the user that the establishment of the connection is agreed) establish the communication connection with the at least one other device, and return a notification to the at least one other device, the notification is configured to represent that the device that initiates the processing of the to-be-processed task has the capability to at least partially process the to-be-processed task.

The at least one other device may establish the communication connection with the device that initiates the processing of the to-be-processed task in response to the notification from the device that initiates the processing of the to-be-processed task.

The above two manners introduce the manners for establishing the communication connection between the device that initiates the processing of the to-be-processed task and the at least one other device. The terminal system may also be constructed within these devices by configuring a terminal system construction protocol, and the communication connection is established between every two devices among all devices in the terminal system, which can simplify the process of establishing the communication connection between the devices. The wireless network communication mode is taken as an example in the following to introduce the construction process of the terminal system in details.

When a wireless network is accessed by a plurality of devices (for example, these devices are pre-configured with the terminal system construction protocol), such as smartphones, smart TVs, tablets, PCs, smart speakers, vehicle-mounted terminals, AR/VR/MR glasses, smart glasses, wearable electronic devices, wearable devices, home appliances, vehicle-mounted devices, travel devices (such as cars/scooters, etc.), etc., the user may initiate the construction of the terminal system by operating any device. The device operated by the user may be called an initiating device, and other devices may be called responding devices.

If a device acts as the initiating device, it may send a system construction request to at least one device (such as other terminal devices accessing the wireless network) after operated by the user.

If a device acts as a responding device, it may receive the system construction request sent by another terminal device (i.e., the initiating device), prompt the user through a prompt message, and send a response instruction to the other device (i.e., the initiating device) based on an operation instruction input by the user. For example, when the user inputs an consent operation, a response instruction that joining the terminal system is agreed is sent, and when the user inputs a rejection operation, a response instruction hat joining the terminal system is refused is sent.

If a terminal device acts as the initiating device, the terminal system may be further constructed based on the response instruction returned by the at least one device. For example, through the system construction protocol, the initiating device and all responding devices that send response instructions that joining the terminal system is agreed are constructed as the terminal system, and any two terminal devices in the system can communicate with each other.

It should be understood that the initiating device and the responding device in a system construction phase have equal status after the terminal system is established and will no longer be distinguished.

In some embodiments of the present disclosure, each device among all devices (such as a terminal system) that establish the communication connections has a priority. The priority is configured to represent a level of a sharing permission. A device with a high priority can share a sub-task with a device with a low priority to occupy its resource, and the device with the low priority cannot share the sub-task with the devices with the high priority. For example, among smartphones, smart TVs, tablets, PCs, and smart speakers, the smartphones and the tablets have the highest priority, the PCs have the second highest priority, and the smart TVs and the smart speakers have the lowest priority.

Based on the above priority, the provision of the available resource information between the devices mentioned in the step S101 may be directional, that is, each device actively or passively provides the available resource information to other devices whose priority is not higher than its priority, so that a device as the device that initiates the processing of the to-be-processed task can obtain the available resource and the capability of the available resource provided by itself and devices whose priority is not higher than its priority, and then it can process the to-be-processed task on itself and the devices whose priority is not higher than its priority.

In other words, in the step S101, the priority of the at least one other device is not higher than the priority of the device that initiates the processing of the to-be-processed task, so that the to-be-processed task can only be shared with a device whose priority is not higher than a priority of a device to which the to-be-processed task belongs, but cannot be shared with a device whose priority is higher than the priority of the device to which the to-be-processed task belongs. That is, the to-be-processed task can only be shared in a direction towards the lower (or equal) priority, but cannot be shared in the direction towards the higher priority.

The priority of each device may be predefined, or the priority of each device may be determined in advance based on the frequency of use and/or the time period of use. For example, the higher the frequency of use, the higher the priority, and the lower the frequency of use, the lower the priority. This is because a device with the low frequency of use can be occupied by a task of another device without affecting the operation of the device. The frequencies of use of the device in different time periods are different. For example, the frequency of use of a television during working hours is very low, but the frequency of use of the television during non-working hours is high. Therefore, if the frequency of use in a certain time period is used to determine the priority of the device, it is relatively one-sided. Therefore, the priorities of each device in different time periods can be determined based on the frequencies of use of the corresponding device in different time periods.

In this embodiment, the task sharing can be directional and selective, which avoids blindly sharing the task to cause the performance of the important device to be affected, as well as the performance of the device being used by the user to be affected, so that an idle or less important device can provide the computing power to the in-use or more important device, thereby making the usage experience of the user better.

In some embodiments of the present disclosure, the computing power of the device that initiates the processing of the to-be-processed task may also be used by other devices, that is, the device that initiates the processing of the to-be-processed task receives a task processing request sent by the at least one other device and executes the task sent by the at least one other device. That is to say, the device that initiates the processing of the to-be-processed task acts as an execution subject executing the method shown in FIG. 1 due to the to-be-processed task, and another device may also be used as the execution subject for the method shown in FIG. 1, and uses the device that initiates the processing of the to-be-processed task. In addition, the device that initiates the processing of the to-be-processed task often serves as both a task distributor and a task receiver in the method shown in FIG. 1.

Reference is made to FIG. 2, which shows a flow of a method on a side of a device that provides an available resource. The method includes steps S201 to S202.

In the step S201, an available resource request from at least one other device is responded.

In order to make at least one other device to provide the available resource to the device or the other device that initiates the processing of the to-be-processed task, the device or the other device that initiates the processing of the to-be-processed task may send the available resource request to the at least one other device, and the available resource request is configured to request a receiver to provide the available resource information. Furthermore, the at least one other device may perform this step, that is, respond to the available resource request of the at least one other device.

In the step S202, available resource information is determined and sent to the at least one other device, and the available resource information includes a resource provision capability that satisfies a resource availability state.

The at least one other device may directly provide its own resource provision capability as the available resource information to the device that initiates the processing of the to-be-processed task. Alternatively, when the at least one other device determines that its own resource provision capability satisfies the resource availability state, it provides its own resource provision capability as the available resource information to the device that initiates the processing of the to-be-processed task.

It can be understood that, in addition to passively providing the available resource information to the device that initiates the processing of the to-be-processed task in the manner shown in FIG. 2, the at least one other device may also actively provide the available resource information to the device that initiates the processing of the to-be-processed task. For example, when the at least one other device actively provides the available resource information, the available resource information may be provided under at least one of the following conditions:
in response to initiating a new device notification, that is, when a device that provides the available resource information is connected to a new device, it may provide the available resource information to the new device, such as its own available resource information, or its own available resource information and available resource information of other devices. In addition, it should be understood that the new device may also return its own available resource information due to this condition. In other words, when two devices establish a new connection, they will provide each other with the available resource information due to this condition. The available resource information provided may be its own available resource information, or the available resource information of itself and other devices;
in response to a time period since a previous provision of the available resource information being a preset time period, that is, the device that provides the available resource information provides the available resource information to other devices with a cycle of the preset time period. For example, the device that provides the available resource information sends the available resource information to other devices with the cycle of the preset time period, or update its cached available resource information with the cycle of the preset time period, so that other devices can obtain the available resource information; and
in response to detecting that the available resource information is out of a preset range, the preset range may be an absolute range or a relative range (for example, a preset interval length around the last available resource information provided), and being out of the preset range may be greater than an upper limit of the range or less than a lower limit of the range. Taking the computing power available for provision among the available resource information as an example, in a case that a preset range of the computing power available for provision is [X,Y], if a computing power available for provision of the device that provides the available resource information is less than X (or less than X and a difference with X is greater than n), it is determined that the available resource information is out of the preset range, and in this case, the available resource information is provided to other devices, or if the computing power available for provision of the device that provides the available resource information is greater than Y (or greater than Y and a difference with Y is greater than n), it is determined that the available resource information is out of the preset range, and in this case, the available resource information is provided to other devices. X, Y, and n are all values of the computing power available for provision, and are all greater than 0.

The available resource information includes a resource provision capability, and the resource provision capability may include at least one of: a computing power available for provision, a processor power or a storage capacity.

More details about the provision of the available resource information between devices have been introduced on the side of the device that initiates the processing of the to-be-processed task shown in FIG. 1, which will not be repeated here.

In some embodiments of the present disclosure, at least part of the to-be-processed task may also be received, and the at least part of the to-be-processed task is executed. That is to say, when the device that initiates the processing of the to-be-processed task distributes a task or a sub-task to the at least one other device, the at least one other device may receive and process the distributed task or sub-task.

For example, the received at least part of the to-be-processed task is from at least one other device with a higher priority.

The priority is configured to represent a level of a sharing permission. A device with a high priority can share a sub-task with a device with a low priority to occupy its resource, and the device with the low priority cannot share the sub-task with the devices with the high priority. For example, among smartphones, smart TVs, tablets, PCs, and smart speakers, the smartphones and the tablets have the highest priority, the PCs have the second highest priority, and the smart TVs and the smart speakers have the lowest priority. Setting the priority allows the to-be-processed task to only be shared with a device whose priority is not higher than a priority of a device to which the to-be-processed task belongs, but cannot be shared with a device whose priority is higher than the priority of the device to which the to-be-processed task belongs. That is, the to-be-processed task can only be shared in a direction towards the lower (or equal) priority, but cannot be shared in the direction towards the higher priority.

The priority of each device may be predefined, or the priority of each device may be determined in advance based on the frequency of use and/or the time period of use. For example, the higher the frequency of use, the higher the priority, and the lower the frequency of use, the lower the priority. This is because a device with the low frequency of use can be occupied by a task of another device without affecting the operation of the device. The frequencies of use of the device in different time periods are different. For example, the frequency of use of a television during working hours is very low, but the frequency of use of the television during non-working hours is high. Therefore, if the frequency of use in a certain time period is used to determine the priority of the device, it is relatively one-sided. Therefore, the priorities of each device in different time periods can be determined based on the frequencies of use of the corresponding device in different time periods.

In this example, the task sharing can be directional and selective, which avoids blindly sharing the task to cause the performance of the important device to be affected, as well as the performance of the device being used by the user to be affected, so that an idle or less important device can provide the computing power to the in-use or more important device, thereby making the usage experience of the user better.

As another example, the at least one other device may also send all or part of the at least part of the to-be-processed task to a third device. The third device refers to a device other than a device to which the to-be-processed task belongs and the device that executes the method. In this example, when the at least part of the to-be-processed task is received, the at least part of the to-be-processed task may be processed by the device itself or continue to be distributed to other devices, thereby realizing a relay of the task distribution and avoiding the task processing failure or the inefficiency caused by the device receiving the distributed task not being able to process the task. The to-be-processed task is split into at least one sub-task by a device A, and one of the sub-tasks is distributed to a device B for processing, and the device B can transfer all or part of the sub-task to a device C for processing, and so on, which can realize the multi-level relay processing of the task.

Based on this, at least one embodiment of the present disclosure provides a method for processing a task, which is applied to a plurality of devices connected to each other, such as a plurality of devices in the same communication environment. A to-be-processed task of a current device having the to-be-processed task is distributed to the plurality of devices for processing (devices other than the current device among the plurality of devices may be referred to as available devices), thereby improving task processing efficiency and device utilization.

The specific content of this method will be introduced in detail from the current device side and the available device side, respectively.

Reference is made to FIG. 3, which shows a flow of a method on a current device side. The method includes steps S301 to S303.

In the step S301, information about an available device that is equipped with a capability to process a to-be-processed task is obtained, the to-be-processed task is a task of a current device, and the available device is capable of being in communication with the current device.

The current device is a device that executes the method, and the available device is within the communication coverage of the current device, the available device and the current device can communicate with each other. For example, the current device and the available device may be devices in the same WiFi environment. Specifically, there are smartphones, smart TVs, tablets, PCs, smart speakers, vehicle-mounted terminals, home robots, AR/VR/MR glasses, smart glasses, wearable electronic devices, wearable devices, home appliances, vehicle-mounted devices, travel devices (such as cars/scooters, etc.), etc. in a certain WiFi environment, where the smartphone may be the current device in the method, and other devices may be the available devices in the method (it can be understood that the selection of the current device and the available device does not limit the execution subject of this method, and another device may also execute this method as the current device when having the to-be-processed task).

The information about the available device may include at least one of: a name of the available device, a priority of processing the at least part of the to-be-processed task, or a processing capability of processing the at least part of the to-be-processed task.

The name of the available device is an inherent name, such as a smartphone, a smart TV, a tablet, a PC, a smart speaker, a vehicle-mounted terminal, a home robot, AR/VR/MR glasses, smart glasses, a wearable electronic device, a wearable device, a home appliance, a vehicle-mounted device, a travel device (such as a car/scooter, etc.), or a user-defined name, such as A, B, C, etc.

A priority of processing the at least part of the to-be-processed task is configured to represent a level of a sharing permission. A device with a high priority can share a sub-task with a device with a low priority to occupy its resource, and the device with the low priority cannot share the sub-task with the devices with the high priority. For example, among smartphones, smart TVs, tablets, PCs, and smart speakers, the smartphones and the tablets have the highest priority, the PCs have the second highest priority, and the smart TVs and the smart speakers have the lowest priority. The priority makes the task sharing directional and selective, which avoids blindly sharing the task to cause the performance of the important device to be affected, as well as the performance of the device being used by the user to be affected, so that an idle or less important device can provide the computing power to the in-use or more important device, thereby making the usage experience of the user better.

It should be noted that the priority of each device may be predefined, or the priority of each device may be determined in advance based on the frequency of use and/or the time period of use. For example, the higher the frequency of use, the higher the priority, and the lower the frequency of use, the lower the priority. This is because a device with the low frequency of use can be occupied by a task of another device without affecting the operation of the device. The frequencies of use of the device in different time periods are different. For example, the frequency of use of a television during working hours is very low, but the frequency of use of the television during non-working hours is high. Therefore, if the frequency of use in a certain time period is used to determine the priority of the device, it is relatively one-sided. Therefore, the priorities of each device in different time periods can be determined based on the frequencies of use of the corresponding device in different time periods.

The processing capability of processing the at least part of the to-be-processed task includes at least one of: a computing power available for provision, a processor power, a storage capacity, a temperature, or a power. The computing power available for provision may be determined by the device in combination with a main frequency of a processor chip, the number of cores of the processor, a memory capacity, a read and write speed of a storage device, a bus bandwidth, a graphics card performance, a hard disk type and interface, the number and type of external devices, selection of a compiler and program optimization, an operating system and software settings, etc.

For example, the information about the available device is transmitted by means of broadcast or unicast. For example, all devices within the communication coverage of the current device transmit information about their available devices by means of broadcast or unicast.

In the step S302, at least one available device is selected to perform at least part of the to-be-processed task.

For example, the at least one available device is selected according to the computing power available for provision of the available device to perform the at least part of the to-be-processed task. In this example, among all the available devices, at least one available device with the highest computing power available for provision is selected to execute the at least part of the to-be-processed task. For example, the at least part of the to-be-processed task includes N sub-tasks, and the number of all available devices connected to the current device is M, M > N, then the M available devices may be sorted in descending order of the computing power available for provision, and the top N available devices are selected to perform N sub-tasks in one-to-one correspondence.

For example, the at least one available device is selected according to the computing power available for provision, the temperature, and the power of the available device to perform the at least part of the to-be-processed task. In this example, available devices with the computing power available for provision not less than the computing power threshold, the power not less than the power threshold, and the temperature not greater than the temperature threshold may be first selected from all available devices as candidate devices, and then the at least one available device with the highest computing power available for provision is selected from all candidate devices to perform the at least part of the to-be-processed task.

In the step S303, processing results of the at least part of the to-be-processed task of the available device are obtained.

For example, the processing results are integrated into a processing result output of the to-be-processed task.

In a case where the current device processes part of the to-be-processed task, and the available device processes part of the to-be-processed task, processing results of individual parts of the to-be-processed task may be obtained and fused to integrate the processing results into the processing result output of the to-be-processed task.

In a case where all of the to-be-processed task is processed by the available device, if all of the to-be-processed task is processed by one available device, a task processing result of this available device is directly obtained as the processing result output of the to-be-processed task, and if all of the to-be-processed task is processed by a plurality of available devices, processing results of individual parts of the to-be-processed task may be obtained and fused to integrate the processing results into the processing result output of the to-be-processed task.

For example, different units in the data processing model are responsible for performing feature processing from different dimensions on image data, and these different units may be split into independent parallel parts to form a plurality of data processing sub-tasks. Data processing results of these data processing sub-tasks are feature processing results of the image data in one dimension, and in this step, feature processing results in these dimensions may be fused to obtain the target processing result of the image data, such as an image recognition result.

The method for processing the task provided by the present disclosure distributes part or all of the to-be-processed task that originally belongs to the current device to the at least one available device for assistant processing, thereby improving the processing efficiency of the to-be-processed task and the resource utilization of the available device, reducing the computing load on the current device, improving the response speed of the current device to the user operation and improving the usage experience of the user.

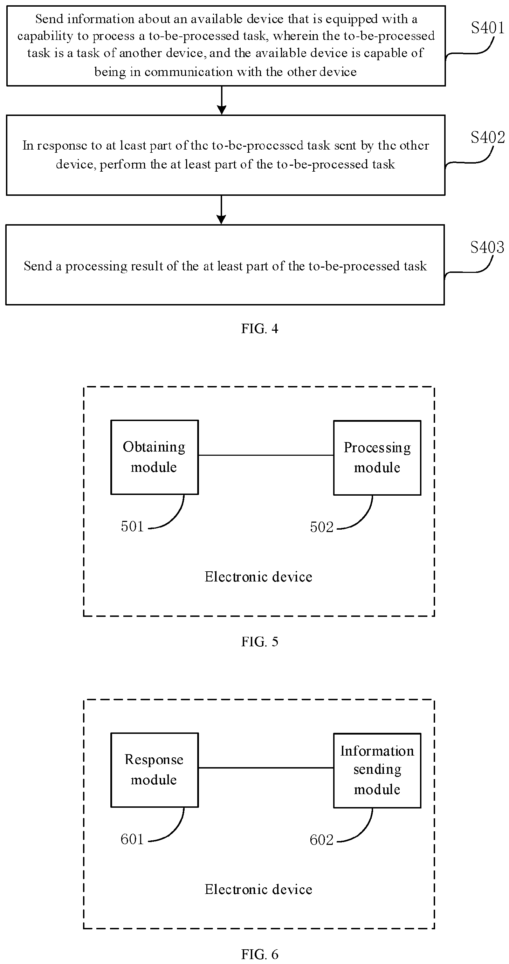

Reference is made to FIG. 4, which shows a flow of a method on a current device side. The method includes steps S401 to S403.

In the step S401, information about an available device that is equipped with a capability to process a to-be-processed task is sent, the to-be-processed task is a task of another device, and the available device is capable of being in communication with the other device.

The available device is within the communication coverage of the other device (i.e., the current device in FIG. 3), and the available device and the other device can communicate with each other. For example, the other device and the available device may be devices in the same WiFi environment. Specifically, there are smartphones, smart TVs, tablets, PCs, smart speakers, vehicle-mounted terminals, home robots, AR/VR/MR glasses, smart glasses, wearable electronic devices, wearable devices, home appliances, vehicle-mounted devices, travel devices (such as cars/scooters, etc.), etc. in a certain WiFi environment, where the smartphone may be the other device in the method, and other devices may be available devices in the method (it can be understood that the selection of the other device and the available device is not a limitation on the execution subject of this method, and other devices may also serve as the other device when having the to-be-processed task).

The information about the available device may include at least one of: a name of the available device, a priority of processing the at least part of the to-be-processed task, or a processing capability of processing the at least part of the to-be-processed task.

The name of the available device is an inherent name, such as a smartphone, a smart TV, a tablet, a PC, a smart speaker, a vehicle-mounted terminal, a home robot, AR/VR/MR glasses, smart glasses, a wearable electronic device, a wearable device, a home appliance, a vehicle-mounted device, a travel device (such as a car/scooter, etc.), or a user-defined name, such as A, B, C, etc.

A priority of processing the at least part of the to-be-processed task is configured to characterize a level of a sharing permission. A device with a high priority can share a sub-task with a device with a low priority to occupy its resource, and the device with the low priority cannot share the sub-task with the devices with the high priority. For example, among smartphones, smart TVs, tablets, PCs, and smart speakers, the smartphones and the tablets have the highest priority, the PCs have the second highest priority, and the smart TVs and the smart speakers have the lowest priority. The priority makes the task sharing directional and selective, which avoids blindly sharing the task to cause the performance of the important device to be affected, as well as the performance of the device being used by the user to be affected, so that an idle or less important device can provide the computing power to the in-use or more important device, thereby making the usage experience of the user better.

It should be noted that the priority of each device may be predefined, or the priority of each device may be determined in advance based on the frequency of use and/or the time period of use. For example, the higher the frequency of use, the higher the priority, and the lower the frequency of use, the lower the priority. This is because a device with the low frequency of use can be occupied by a task of another device without affecting the operation of the device. The frequencies of use of the device in different time periods are different. For example, the frequency of use of a television during working hours is very low, but the frequency of use of the television during non-working hours is high. Therefore, if the frequency of use in a certain time period is used to determine the priority of the device, it is relatively one-sided. Therefore, the priorities of each device in different time periods can be determined based on the frequencies of use of the corresponding device in different time periods.

The processing capability of processing the at least part of the to-be-processed task includes at least one of: a computing power available for provision, a processor power, a storage capacity, a temperature, or a power. The computing power available for provision may be determined by the device in combination with a main frequency of a processor chip, the number of cores of the processor, a memory capacity, a read and write speed of a storage device, a bus bandwidth, a graphics card performance, a hard disk type and interface, the number and type of external devices, selection of a compiler and program optimization, an operating system and software settings, etc.

For example, the information about the available device is transmitted by means of broadcast or unicast, that is, the available device may, in response to the other device (the current device in FIG. 3) or actively, send the information about the available device to the other device by means of broadcast or unicast. Before sending the information about the available device, the available device may also determine whether it has the capability to process the to-be-processed task. For example, it is determined from the dimension such as the computing power available for provision, the processor power, and the storage capacity (for example, if the computing power available for provision is greater than a threshold, it is determined that the available device has the capability to process the to-be-processed tasks, etc.), and when the available device has the capability to process the to-be-processed task, the available device sends the information about the available device to the other device.

In the step S402, in response to at least part of the to-be-processed task sent by the other device, the at least part of the to-be-processed task is executed.

For example, the at least part of the to-be-processed task is executed according to the computing power available for provision of the available device.

The other device may select at least one available device with the highest computing power available for provision from all the available devices to perform the at least part of the to-be-processed task, and the available device performing the method is one of the at least one available device with the highest computing power available for provision. For example, the at least part of the to-be-processed task includes N sub-tasks, and the number of all available devices connected to the other device is M, M > N, then the M available devices may be sorted in descending order of the computing power available for provision, and the top N available devices are selected to perform N sub-tasks in one-to-one correspondence.

Alternatively, the other device selects the at least one available device according to the computing power available for provision, the temperature, and the power of the available device to perform the at least part of the to-be-processed task. For example, available devices with the computing power available for provision not less than the computing power threshold, the power not less than the power threshold, and the temperature not greater than the temperature threshold may be first selected from all available devices as candidate devices, and then the at least one available device with the highest computing power available for provision is selected from all candidate devices to perform the at least part of the to-be-processed task.

In the step S403, processing results of the at least part of the to-be-processed task are sent (to the other device mentioned above).

For example, the other device may integrate the processing results into a processing result output of the to-be-processed task.

For example, in a case where the other device processes part of the to-be-processed task, and the available device processes part of the to-be-processed task, processing results of individual parts of the to-be-processed task may be obtained and fused to integrate the processing results into the processing result output of the to-be-processed task.

In a case where all of the to-be-processed task is processed by the available device, if all of the to-be-processed task is processed by one available device, a task processing result of this available device is directly obtained as the processing result output of the to-be-processed task, and if all of the to-be-processed task is processed by a plurality of available devices, processing results of individual parts of the to-be-processed task may be obtained and fused to integrate the processing results into the processing result output of the to-be-processed task.

For example, different units in the data processing model are responsible for performing feature processing from different dimensions on image data, and these different units may be split into independent parallel parts to form a plurality of data processing sub-tasks. Data processing results of these data processing sub-tasks are feature processing results of the image data in one dimension, and in this step, feature processing results in these dimensions may be fused to obtain the target processing result of the image data, such as an image recognition result.

The method for processing the task provided by the present disclosure distributes part or all of the to-be-processed task that originally belongs to the other device to the at least one available device for assistant processing, thereby improving the processing efficiency of the to-be-processed task and the resource utilization of the available device, reducing the computing load on the other device, improving the response speed of the other device to the user operation and improving the usage experience of the user.

According to still another aspect of embodiments of the present disclosure, there is provided an electronic device. Referring to FIG. 5, the electronic device includes:
an obtaining module 501, configured to obtain an available resource for a to-be-processed task, wherein the to-be-processed task is a task of a device; and
a processing module 502, configured to process the to-be-processed task by using the available resource, in response to the to-be-processed task;
wherein the device is capable of connecting to at least one other device; and
the available resource is provided by the device and/or the at least one other device.

In an embodiment of the present disclosure, the electronic device further includes an execution module, configured to determine an execution strategy according to the available resource.

In an embodiment of the present disclosure, the execution strategy includes: distributing the to-be-processed task into at least one sub-task, wherein a sub-task is at least part of the to-be-processed task.

In an embodiment of the present disclosure, when the processing module is configured to process the to-be-processed task, the at least one sub-task is processed by the device and/or the at least one other device.

In an embodiment of the present disclosure, when the processing module is configured to process the to-be-processed task, the to-be-processed task is processed by the device and/or the at least one other device.

In an embodiment of the present disclosure, when the execution module is configured to determine the at least one sub-task according to the available resource, when distributing the to-be-processed task into the at least one sub-task.

In an embodiment of the present disclosure, the execution module is configured to, when determining the at least one sub-task according to the available resource:
determine the to-be-processed task as the at least one sub-task according to a capability of the available resource, wherein the capability of the available resource includes a resource provision capability of the device or a resource provision capability of the at least one other device that satisfies a resource availability state.

In an embodiment of the present disclosure, the processing module is configured to, when processing the to-be-processed task:
distribute the at least one sub-task to the device and/or the at least one other device according to a capability of the available resource to cause the device and/or the at least one other device to process the at least one sub-task, wherein the capability of the available resource includes a resource provision capability of the device or a resource provision capability of the at least one other device that satisfies a resource availability state.

In an embodiment of the present disclosure, the electronic device further includes an information receiving module, configured to:
receive available resource information of the device and/or the at least one other device, wherein the available resource information includes a resource provision capability of the device.

In an embodiment of the present disclosure,the electronic device further includes a request sending module, configured to:
send an available resource request to the at least one other device.

In an embodiment of the present disclosure, the processing module is configured to, when processing the to-be-processed task by using the available resource:
connect with the at least one other device by using the available resource to cause the at least one other device to process the to-be-processed task; or
connect with the at least one other device by using the available resource to cause the device and the at least one other device to process the to-be-processed task; or
perform the to-be-processed task by using the device among the available resource.

In an embodiment of the present disclosure, the electronic device further includes a communication module, configured to:
establish a connection with the at least one other device in response to a notification from the at least one other device; and/or
receive a request message from the at least one other device and establish communication with the at least one other device, wherein the notification or the request message is configured to represent that the at least one other device is equipped with a capability to at least partially process the to-be-processed task.

In an embodiment of the present disclosure, the electronic device further includes an information sending module, configured to:
respond to an available resource request from the at least one other device; and
obtain available resource information of the device and returning the available resource information to the at least one other device, wherein the available resource information includes a resource provision capability of the device.

In an embodiment of the present disclosure, the electronic device further includes an information providing module, configured to:
provide available resource information of the device and/or the at least one other device, wherein the available resource information includes a resource provision capability of the device or the at least one other device.

In an embodiment of the present disclosure, the information providing module is configured to provide the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the electronic device further includes a task receiving module, configured to:
receive a task processing request sent by the at least one other device; and
perform a task sent by the other device.

In an embodiment of the present disclosure, a priority of the at least one other device is not higher than a priority of the device.

In an embodiment of the present disclosure, the electronic device further includes a priority module, configured to:
determine the priority according to a frequency of use and/or a time period of use of the device.

In an embodiment of the present disclosure, the available resource includes a capability of the available resource, the capability of the available resource includes a resource provision capability of the device or the at least one other device that satisfies a resource availability state, and the resource provision capability includes at least one of a computing power available for provision, a processor power or a storage capacity.

According to still another aspect of embodiments of the present disclosure, there is provided an electronic device. Referring to FIG. 6, the electronic device includes:
a response module 601, configured to respond to an available resource request from at least one other device; and
an information sending module 602, configured to determine available resource information, and send the available resource information to the at least one other device, wherein the available resource information includes a resource provision capability satisfying a resource availability state.

In an embodiment of the present disclosure, the electronic device further includes a receiving module, configured to:
receive at least part of a to-be-processed task; and
perform the at least part of the to-be-processed task.

In an embodiment of the present disclosure, the electronic device further includes an information providing module, configured to:
provide the available resource information, wherein the available resource information includes the resource provision capability satisfying the resource availability state.

In an embodiment of the present disclosure, the information providing module is configured to provide the available resource information under at least one of the following conditions:
in response to initiating a new device notification;
in response to a time period since a previous provision of the available resource information being a preset time period; or
in response to detecting that the available resource information is out of a preset range.

In an embodiment of the present disclosure, the available resource information includes at least one of:
a computing power available for provision;
a processor power; or
a storage capacity.

In an embodiment of the present disclosure, the received at least part of the to-be-processed task is from the at least one other device with a higher priority.

In an embodiment of the present disclosure, the electronic device further includes a task sending module, configured to:
send part or all of the at least part of the to-be-processed task to a third device.

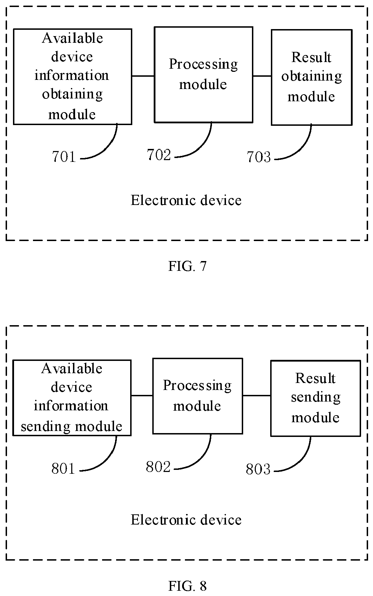

According to still another aspect of embodiments of the present disclosure, there is provided an electronic device. Referring to FIG. 7, the electronic device includes:
an available device information obtaining module 701, configured to obtain information about an available device that is equipped with a capability to process a to-be-processed task, wherein the to-be-processed task is a task of a current device, and the available device is capable of being in a communication with the current device;
a processing module 702, configured to select at least one available device to perform at least part of the to-be-processed task; and
a result obtaining module 703, configured to obtain a processing result of the available device for the at least part of the to-be-processed task.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the electronic device further includes a result integration module, configured to:
integrate the processing result into a processing result output of the to-be-processed task.

In an embodiment of the present disclosure, the available device is within communication coverage of the current device.

In an embodiment of the present disclosure, the processing module is configured to:
select, according to a computing power available for provision of the available device, the at least one available device to perform the at least part of the to-be-processed task.

In an embodiment of the present disclosure, the information about the available device is transmitted through broadcast or unicast.

According to still another aspect of embodiments of the present disclosure, there is provided an electronic device. Referring to FIG. 8, the electronic device includes:
an available device information sending module 801, configured to send information about an available device that is equipped with a capability to process a to-be-processed task, wherein the to-be-processed task is a task of another device, and the available device is capable of being in communication with the other device;
a processing module 802, configured to, in response to at least part of the to-be-processed task sent by the other device, perform the at least part of the to-be-processed task; and
a result sending module 803, configured to send a processing result of the at least part of the to-be-processed task.

In an embodiment of the present disclosure, the information about the available device is transmitted through broadcast or unicast.

In an embodiment of the present disclosure, the information about the available device includes at least one of:
a name of the available device;
a priority of processing the at least part of the to-be-processed task; or
a processing capability of processing the at least part of the to-be-processed task.

In an embodiment of the present disclosure, the capability to process the to-be-processed task includes at least one of:
a computing power available for provision;
a processor power; or
a storage capacity.

In an embodiment of the present disclosure, the electronic device further includes a result integration module, configured to:
integrate the processing result into a processing result output of the to-be-processed task.

In an embodiment of the present disclosure, the available device is within communication coverage of the other device.

In an embodiment of the present disclosure, the processing module is configured to:
perform the at least part of the to-be-processed task according to a computing power available for provision of the available device.

According to still another aspect of embodiments of the present disclosure, there is provided an electronic device, and the electronic device includes a memory and a processor, wherein the memory is configured to store computer instructions executable on the processor, and the processor is configured to implement the method for processing the task as described above when executing the computer instructions.

=

According to still another aspect of embodiments of the present disclosure, there is provided a data processing system, and the data processing system includes at least one electronic device as provided above.

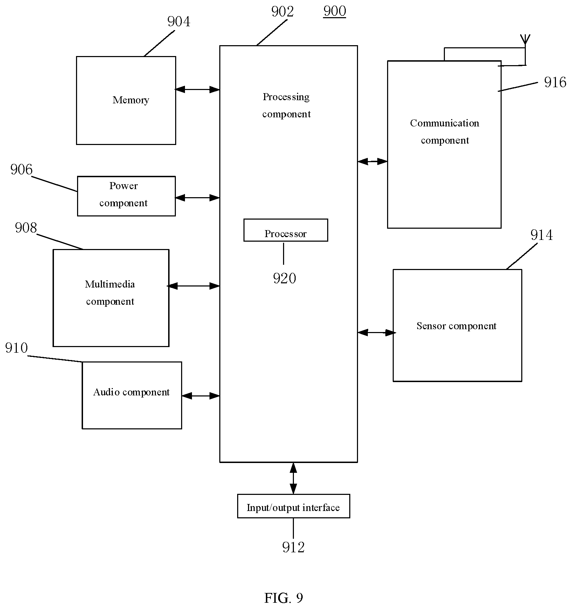

Reference is made to FIG. 9, which shows a block diagram of an electronic device according to an embodiment of the present disclosure. For example, an electronic device 900 may be a mobile phone, a computer, a digital broadcast terminal, a messaging device, a gaming console, a tablet, a medical device, exercise device, a personal digital assistant, etc.

Referring to FIG. 9, the electronic device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the electronic device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the electronic device 900. Examples of such data include instructions for any applications or methods operated on the electronic device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the electronic device 900. The power component 906 may include a power management system, one or more power sources, and any other components associated with the generation, management, and distribution of power in the electronic device 900.

The multimedia component 908 includes a screen providing an output interface between the electronic device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 908 includes a front camera and/or a rear camera. The front camera and the rear camera may receive an external multimedia datum while the E electronic device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the electronic device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide state assessments of various aspects of the electronic device 900. For instance, the sensor component 914 may detect an open/closed state of the electronic device 900, relative positioning of components, e.g., the display and the keypad, of the electronic device 900, a change in position of the electronic device 900 or a component of the electronic device 900, a presence or absence of user contact with the electronic device 900, an orientation or an acceleration/deceleration of the electronic device 900, and a change in temperature of the electronic device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the electronic device 900 and other devices. The electronic device 900 can access a wireless network based on a communication standard, such as WiFi, 2G, 3G, 4G, 5G, or a combination thereof. In one embodiment, the communication component 916 receives a broadcast signal or broadcast associated information from an external broadcast management system via a broadcast channel. In one embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments of the present disclosure, the electronic device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for processing the task of the electronic device as described above.

In embodiments of the present disclosure, there is further provided a non-transitory computer-readable storage medium including instructions, such as the memory 904 including instructions executable by the processor 920 in the electronic device 900 to complete the above-described method for processing the task of the electronic device. For example, the non-transitory computer-readable storage medium may be a ROM, a Random Access Memory (RAM), a CD-ROM, a magnetic tape, a floppy disc, an optical data storage device, and the like.

Other embodiments of the present disclosure will be apparent to those skilled in the art from consideration of the specification and practice of the present disclosure disclosed herein. The present disclosure is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope of the present disclosure is defined by the appended claims.

## Claims

1. A method for processinga task, comprising:
obtaining an available resource for a to-be-processed task, wherein the to-be-processed task is a task of a device; and
processing the to-be-processed task by using the available resource, in response to the to-be-processed task;
wherein the device is capable of connecting to at least one other device; and
the available resource is provided by at least one of the device or the at least one other device.

2. The method according to claim 1, wherein the method further comprises:
determining an execution strategy according to the available resource;
wherein the execution strategy comprises: distributing the to-be-processed task into at least one sub-task, wherein a sub-task is at least part of the to-be-processed task; and
wherein the processing the to-be-processed task comprises:
processing, by the at least one of the device or the at least one other device, the at least one sub-task.

3. The method according to claim 1 or 2, wherein the processing the to-be-processed task comprises:
processing, by the at least one of the device or the at least one other device, the to-be-processed task.

4. The method according to claim 2 or 3, wherein the distributing the to-be-processed task into the at least one sub-task comprises:
determining the at least one sub-task according to the available resource; and
wherein the determining the at least one sub-task according to the available resource comprises:
determining the to-be-processed task as the at least one sub-task according to a capability of the available resource, wherein the capability of the available resource comprises at least one of a resource provision capability of the device that satisfies a resource availability state or a resource provision capability of the at least one other device that satisfies the resource availability state.

5. The method according to any one of claims 2-4, wherein the processing the to-be-processed task comprises:
distributing the at least one sub-task to the at least one of the device or the at least one other device according to a capability of the available resource to cause the at least one of the device or the at least one other device to process the at least one sub-task, wherein the capability of the available resource comprises at least one of a resource provision capability of the device that satisfies a resource availability state or a resource provision capability of the at least one other device that satisfies the resource availability state.

6. The method according to any one of the preceding claims, wherein the method further comprises:
obtaining available resource information of the at least one of the device or the at least one other device, wherein the available resource information comprises at least one of a resource provision capability of the device or a resource provision capability of the at least one other device.

7. The method according to any one of the preceding claims, wherein the method further comprises:
sending an available resource request to the at least one other device.

8. The method according to any one of the preceding claims, wherein the processing the to-be-processed task by using the available resource comprises:
connecting with the at least one other device to cause the at least one other device to process the to-be-processed task; or
connecting with the at least one other device to cause the device and the at least one other device to process the to-be-processed task; or
processing, by the device, the to-be-processed task by using the available resource.

9. The method according to any one of the preceding claims, wherein the method further comprises at least one of:
establishing a connection with the at least one other device in response to a notification from the at least one other device; or
receiving a request message from the at least one other device and establishing communication with the at least one other device,
wherein the notification or the request message is configured to represent that the at least one other device is equipped with a capability to at least partially process the to-be-processed task.

10. The method according to any one of the preceding claims, wherein the method further comprises:
responding to an available resource request from the at least one other device; and
obtaining available resource information of the device and returning the available resource information to the at least one other device, wherein the available resource information comprises a resource provision capability of the device.

11. The method according to any one of the preceding claims, wherein the method further comprises:
providing available resource information of the at least one of the device or the at least one other device under at least one of the following conditions, wherein the available resource information comprises at least one of a resource provision capability of the device or a resource provision capability of the at least one other device:
in response to initiating a new device notification;
in response to a time period since a previous provision of the available resource information being a preset time period; or
in response to detecting that the available resource information is out of a preset range.

12. The method according to any one of the preceding claims, wherein the method further comprises:
receiving a task processing request sent by the at least one other device; and
performing a task sent by the at least one other device.

13. The method according to any one of the preceding claims, wherein a priority of the at least one other device is not higher than a priority of the device; and
wherein the method further comprises:
determining the priority according to a frequency of use and/or a time period of use of the device.

14. The method according to any one of the preceding claims, wherein the available resource comprises a capability of the available resource, the capability of the available resource comprises at least one of a resource provision capability of the device that satisfies a resource availability state or a resource provision capability of the at least one other device that satisfies the resource availability state, and the resource provision capability comprises at least one of a computing power available for provision, a processor power or a storage capacity.

15. An electronic device, comprising a memory and a processor, wherein the memory is configured to store computer instructions executable on the processor, and the processor is configured to implement the method for processing the task according to any one of claims 1 to 14 when executing the computer instructions.
